# EUROPEAN PATENT APPLICATION

(11) **EP 4 668 108 A1**
(43) Date of publication of application: **24.12.2025**
(21) Application number: 24756238.2
(22) Date of filing: 07.02.2024
(51) Int. Cl.: G06F 9/451, G06F 3/0482, G06F 3/0486, H04L 65/60

(54) **MEDIA CONTENT DISPLAY METHOD AND APPARATUS, DEVICE, READABLE STORAGE MEDIUM, AND PRODUCT**

(30) Priority: 14.02.2023 CN 202310170306
(71) Applicant: Beijing Zitiao Network Technology Co., Ltd., Beijing 100190 (CN)
(72) Inventor: SONG, Shaohua, Beijing 100028 (CN); LI, Xin, Beijing 100028 (CN); WANG, Lulu, Beijing 100028 (CN)
(74) Representative: Isarpatent
(86) International application number: PCT/CN2024/076665
(87) International publication number: WO 2024/169865

(57) **Abstract**

The embodiments of the present invention provide a media content display method and apparatus, a device, a readable storage medium, and a product. The method comprises: playing back a first media content in a first media content stream in a preset second playback mode in a media content playback interface; in response to a playback mode switching operation triggered in the media content playback interface, playing back the first media content in a preset first playback mode in the media content playback interface, and displaying the first media content in the media content playback interface in the first playback mode; in response to a first trigger operation in a first preset area of the media content playback interface, displaying multiple pieces of second media content associated with the first media content.

## Description

The present application claims priority to Chinese Patent Application No. 202310170306.0, filed on February 14, 2023, which is incorporated herein by reference in its entirety as a part of the present application.

### TECHNICAL FIELD

Embodiments of the present disclosure relate to a method for displaying media content, an apparatus, a device, a readable storage medium, and a product.

### BACKGROUND

When a user browses media content in video software, they can switch the viewing mode of the media content, such as switching the media content to a clear-screen mode, etc. for watching. However, the content displayed in a media content playback interface is relatively limited in the switching mode.

### SUMMARY

Embodiments of the present disclosure provide a method for displaying media content, an apparatus, a device, a readable storage medium, and a product, so as to solve the technical problem that the content displayed in a media content playback interface is relatively limited.

An embodiment of the present disclosure provides a media content display method. The method includes:
playing first media content in a first media content stream in a preset second playback mode in a media content playback interface, where the first media content stream includes a plurality of pieces of media content, with a switch between the media content being performed in the media content stream based on a first trigger operation;
playing the first media content in a preset first playback mode in the media content playback interface in response to a playback mode switching operation triggered in the media content playback interface, where the first media content is displayed in the media content playback interface in the first playback mode; and
displaying a plurality of pieces of second media content associated with the first media content in response to the first trigger operation in a first preset area of the media content playback interface.

An embodiment of the present disclosure provides an apparatus for displaying media content. The apparatus includes:
a playback module configured to play first media content in a first media content stream in a preset second playback mode in a media content playback interface, where the first media content stream includes a plurality of pieces of media content, with a switch between the media content being performed in the media content stream based on a first trigger operation;
a switching module configured to play the first media content in a preset first playback mode in the media content playback interface in response to a playback mode switching operation triggered in the media content playback interface, where the first media content is displayed in the media content playback interface in the first playback mode; and
a display module configured to display a plurality of pieces of second media content associated with the first media content in response to the first trigger operation in a first preset area of the media content playback interface.

An embodiment of the present disclosure provides an electronic device. The electronic device includes: a processor and a memory, where
the memory stores computer-executable instructions; and
the processor executes the computer-executable instructions stored in the memory, to cause the at least one processor to perform the method for displaying media content according to the above embodiment and various possible designs of the above embodiment.

An embodiment of the present disclosure provides a computer-readable storage medium. The computer-readable storage medium stores computer-executable instructions that, when executed by a processor, cause the method for displaying media content according to the above embodiment and various possible designs of the above embodiment to be implemented.

An embodiment of the present disclosure provides a computer program product. The computer program product includes a computer program that, when executed by a processor, causes the method for displaying media content according to the above embodiment and various possible designs of the above embodiment to be implemented.

### BRIEF DESCRIPTION OF DRAWINGS

In order to describe the technical solutions in the embodiments of the present disclosure more clearly, the accompanying drawings for describing the embodiments will be briefly described below. Apparently, the accompanying drawings in the following description are some embodiments of the present disclosure, and those of ordinary skill in the art may still derive other accompanying drawings from these accompanying drawings without creative efforts.
FIG. 1 is a schematic flowchart of a method for displaying media content according to an embodiment of the present disclosure;
FIG. 2 is a schematic diagram of interface interaction according to an embodiment of the present disclosure;
FIG. 3 is a schematic diagram of another interface interaction according to an embodiment of the present disclosure;
FIG. 4 is a schematic diagram of another interface interaction according to an embodiment of the present disclosure;
FIG. 5 is a schematic diagram of another interface interaction according to an embodiment of the present disclosure;
FIG. 6 is a schematic flowchart of a method for displaying media content according to another embodiment of the present disclosure;
FIG. 7 is a schematic diagram of a structure of an apparatus for displaying media content according to an embodiment of the present disclosure; and
FIG. 8 is a schematic diagram of a structure of an electronic device according to an embodiment of the present disclosure.

### DETAILED DESCRIPTION

In order to make the objectives, technical solutions, and advantages of embodiments of the present disclosure clearer, the technical solutions in the embodiments of the present disclosure will be described clearly and completely below with reference to the accompanying drawings in the embodiments of the present disclosure. Apparently, the embodiments described are some rather than all of the embodiments of the present disclosure. All other embodiments obtained by those of ordinary skill in the art based on the embodiments of the present disclosure without any creative effort shall fall within the scope of protection of the present disclosure.

In order to solve the technical problem that the content displayed in a media content playback interface is relatively limited, the present disclosure provides a method for displaying media content, an apparatus, a device, a storage medium, and a product.

It should be noted that the method for displaying media content, the apparatus, the device, the storage medium, and the product according to the present disclosure can be applied to any scenario where content is displayed in a media content playback interface.

In some embodiments, only currently playing media content is generally displayed in the media content playback interface, which makes the displayed content limited, resulting in a poor media content display effect.

In order to enrich the interaction modes in the media content playback interface, when first media content in a first media content stream is played in a preset second playback mode in the media content playback interface, the second playback mode can be switched to a first playback mode for playback of the first media content in response to a playback mode switching operation triggered by a user.

Further, in order to enrich the displayed content in the media content playback interface, when the first media content is played in the first playback mode, a plurality of pieces of second media content associated with the first media content can be displayed in response to a first trigger operation of the user in a first preset area of the media content playback interface.

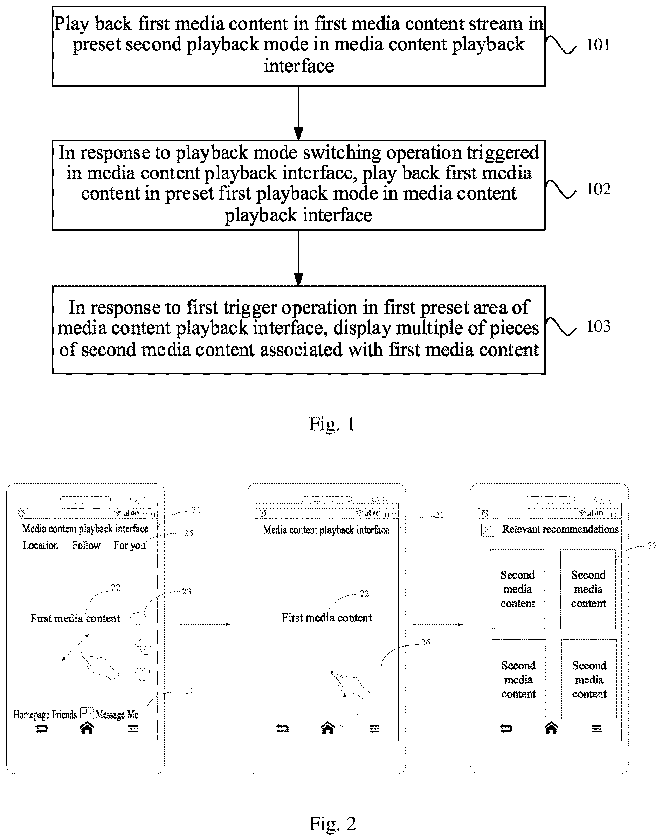

FIG. 1 is a schematic flowchart of a method for displaying media content according to an embodiment of the present disclosure. As shown in FIG. 1, the method includes the steps as follows.

Step 101: playing first media content in a first media content stream in a preset second playback mode in a media content playback interface, where the first media content stream includes a plurality of pieces of media content, with a switch between the media content being performed in the media content stream based on a first trigger operation.

An execution body of this embodiment is an apparatus for displaying media content. The apparatus for displaying media content may be coupled to a terminal device, such that the media content can be displayed based on a trigger operation performed by a user on the terminal device. Alternatively, the apparatus for displaying media content may be coupled to a server, and the server can be in communicative connection with the terminal device. The terminal device can be controlled to display the media content based on the trigger operation performed by the user on the terminal device.

In this embodiment, the user can view the first media content stream in the media content playback interface. The first media content stream may include the plurality of pieces of media content.

Optionally, in order to enrich the playback effect in the media content playback interface, a plurality of playback modes may be preset. The playback modes include at least a first playback mode and a second playback mode. The user can perform a playback mode switching operation according to their actual requirements. For example, after a user opens application software, the first media content may be played by default in the preset second playback mode. The user can switch the current playback mode from the first playback mode to the second playback mode according to their actual requirements.

When the media content is played in the second playback mode, the media content playback interface can include a plurality of interactive controls, in order to facilitate the interactive operation of the user in the media content playback interface. When the playback mode is switched to the second playback mode, one or more interactive controls can be hidden, such that the user can browse the media content more intently.

Further, after the first media content in the first media content stream is played in the preset second playback mode in the media content playback interface, the user can switch the currently playing media content through the preset first trigger operation to play other media content in the first media content stream.

Step 102: playing the first media content in a preset first playback mode in the media content playback interface in response to a playback mode switching operation triggered in the media content playback interface, where the first media content is displayed in the media content playback interface in the first playback mode.

In this embodiment, in response to the playback mode switching operation triggered by the user in the media content playback interface, the current playback mode can be switched from the second playback mode to the preset first playback mode, and the first media content is played in the preset first playback mode in the media content playback interface, where the first media content is displayed in the media content playback interface in the first playback mode.

Optionally, the user can switch the playback mode through a two-finger pinch operation triggered for the first media content. Alternatively, the user can switch the playback mode through a two-finger spread operation triggered for the first media content. Alternatively, the user can expand a feature list through a trigger operation such as a long press, and then switch the playback mode using a switch control in the feature list. This is not limited in the present disclosure.

Step 103: displaying a plurality of pieces of second media content associated with the first media content in response to the first trigger operation in a first preset area of the media content playback interface.

In this embodiment, the first preset area may be preset in the media content playback interface. The first preset area may be a bottom area of the media content playback interface. The plurality of pieces of second media content associated with the first media content can be displayed in response to the first trigger operation of the user in the first preset area of the media content playback interface.

The second media content may be media content associated with the first media content, or the second media content may be media content that includes the same key field as the first media content, etc. The first trigger operation may be a swipe operation in a preset direction, or may be a long press, a double click, or other operations triggered in the first preset area. This is not limited in the present disclosure.

For example, the user can perform the swipe operation from the bottom area to the central area of the screen in the media content playback interface. In response to the swipe operation, the plurality of pieces of second media content associated with the first media content are displayed.

Optionally, after the plurality of pieces of second media content are displayed, the user can also close the plurality of pieces of second media content which are currently displayed through a preset trigger operation. Still in the above example, after the plurality pieces of second media content are displayed through the swipe operation from the bottom area to the central area of the screen, the user can close the plurality of pieces of second media content which are currently displayed through a swipe operation from the top area of the screen to the central area of the screen. Alternatively, after the plurality of pieces of second media content are displayed, a display interface may also include a preset close control, and the user can close the plurality of pieces of second media content which are currently displayed through a trigger operation on the close control.

As an implementable approach, the second media content includes one or more pieces of image-text media content, image media content, video media content, text media content, and audio media content.

Further, based on any one of the above embodiments, step 103 includes:
displaying the plurality of pieces of second media content associated with the first media content in the media content playback interface in response to a swipe operation triggered by a user in a preset direction in the first preset area.

In this embodiment, the first preset operation may be the swipe operation triggered in the preset direction in the first preset area. For example, the first trigger operation may be a swipe operation triggered towards the center of the screen in the first preset area.

Correspondingly, the plurality of pieces of second media content associated with the first media content are displayed in the media content playback interface in response to the swipe operation triggered by the user in the preset direction in the first preset area.

FIG. 2 is a schematic diagram of interface interaction according to an embodiment of the present disclosure. As shown in FIG. 2, the first media content in the first media content stream can be played in a preset second playback mode in a media content playback interface 21. In the second playback mode, first media content 22, at least one interactive control 23 associated with the first media content, associated information 24 corresponding to the first media content, and channel tag information 25 are displayed in the media content playback interface 21. In response to a playback mode switching operation triggered in the media content playback interface 21, such as a two-finger spread or pinch gesture operation, the first media content is played in a preset first playback mode in the media content playback interface 21, where the first media content 22 is displayed in the media content playback interface 21 in the first playback mode. In response to a first trigger operation in a first preset area 26 of the media content playback interface 21, a plurality of pieces of second media content 27 associated with the first media content 22 are displayed. Exemplarily, the plurality of pieces of second media content 27 can be displayed in the media content playback interface 21, or a coverage overlay for displaying the plurality of pieces of second media content 27 can be set over the media content playback interface 21, or a new interface can be opened to display the plurality of pieces of second media content 27.

In the method for displaying media content according to this embodiment, when switching to the first playback mode for playback of the first media content, the plurality of pieces of second media content associated with the first media content are displayed in response to the first trigger operation of the user in the first preset area of the media content playback interface, which can enrich both the interaction modes and the displayed content in the media content playback interface, thus allowing the user to view more media content in the media content playback interface, and improving the display effect.

Further, based on any one of the above embodiments, step 101 includes:
displaying the first media content and at least one of the following in the media content playback interface in the second playback mode: at least one interactive control associated with the first media content, associated information corresponding to the first media content, or channel tag information.

In this embodiment, when the media content is played in the second playback mode, the media content playback interface can also include a plurality of interactive controls in addition to the first media content, in order to facilitate the interactive operation of the user in the media content playback interface. Therefore, the first media content and the at least one of the following are displayed in the media content playback interface in the second playback mode: the at least one interactive control associated with the first media content, the associated information corresponding to the first media content, or the channel tag information.

Further, based on any one of the above embodiments, step 102 includes:
hiding at least one of the following in the media content playback interface in the first playback mode: at least one interactive control associated with the first media content, associated information corresponding to the first media content, or channel tag information.

In this embodiment, in order to enable the user to view the first media content more intuitively, at least one of the following can be hidden in the media content playback interface when the playback mode is switched to the first playback mode: at least one interactive control associated with the first media content, associated information corresponding to the first media content, or channel tag information. Therefore, occlusion of the first media content by other displayed content can be avoided, allowing the user to browse the first media content more intently.

In the method for displaying media content according to this embodiment, after switching from the second playback mode to the first playback mode, one or more of the at least one interactive control, the associated information corresponding to the first media content, and the channel tag information are hidden, which can reduce the displayed content in the media content playback interface. This allows for a more focused display of the currently playing first media content, thereby avoiding the occlusion of the first media content by other displayed content.

Optionally, based on any one of the above embodiments, after step 102, the method further includes:
switching to display third media content in the media content playback interface in response to the first trigger operation in a second preset area of the media content playback interface, where the third media content is media content in the first media content stream and/or the plurality of pieces of second media content associated with the first media content.

In this embodiment, in the first playback mode, the media content playback interface can also include the second preset area. The second preset area includes, but is not limited to, a central area of the media content playback interface.

In order to enrich the interaction modes in the media content playback interface, there may be different interaction effects for the same operation triggered by the user in different preset areas.

Optionally, a switch to the third media content can be performed for display in the media content playback interface in response to the first trigger operation of the user in the second preset area, where the third media content is the media content in the first media content stream and/or the plurality of pieces of second media content associated with the first media content. The first trigger operation includes, but is not limited to, a swipe-up operation, a swipe-down operation, a double-click operation, a long press operation, etc., in the second preset area.

In the method for displaying media content according to this embodiment, a switch to the third media content is performed for display in the media content playback interface in response to the first trigger operation in the second preset area of the media content playback interface, which enriches the interaction modes in the media content playback interface, allowing the user to view more content based on different interactive operations in the media content playback interface.

Optionally, based on any one of the above embodiments, the displaying the plurality of pieces of second media content associated with the first media content in the media content playback interface in response to a swipe operation triggered by a user in a preset direction in the first preset area includes:
in response to a swipe operation triggered by the user in the preset direction in a preset display area of the media content playback interface, displaying the plurality of pieces of second media content in full screen in a second layout;
   or
in response to a swipe operation triggered by the user in the preset direction in a preset display area of the media content playback interface, displaying a target overlay of a preset size, and displaying the plurality of pieces of second media content in a third layout in the target overlay.

In this embodiment, in order to enrich the display effect in the media content playback interface, a plurality of different layouts may be preset, such that the second media content can be displayed in different layouts for different scenarios.

Optionally, the user can implement the display of the second media content through the swipe operation triggered in the preset direction in the preset display area of the media content playback interface. The plurality of pieces of second media content are displayed in full screen in the second layout in response to the swipe operation triggered by the user in the preset direction in the preset display area of the media content playback interface. In the second layout, the plurality of pieces of second media content can be displayed in full screen in multiple columns.

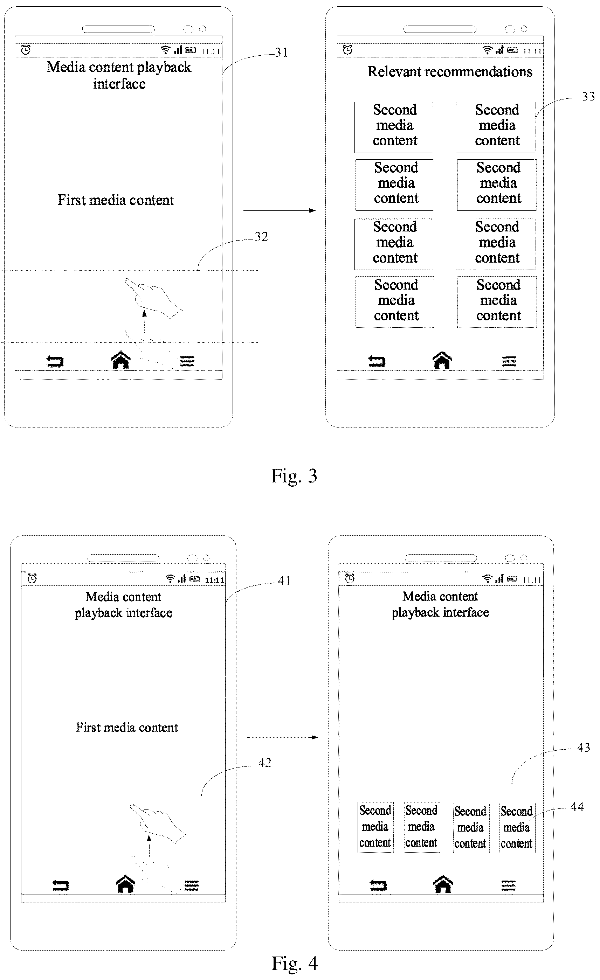

FIG. 3 is a schematic diagram of another interface interaction according to an embodiment of the present disclosure. As shown in FIG. 3, a plurality of pieces of second media content 33 are displayed in full screen in the second layout in response to a swipe operation triggered by the user in a preset direction in a preset display area 32 of a media content playback interface 31. In the second layout, the second media content 33 can be displayed in multiple columns in a display interface.

As an implementable approach, a target overlay of a preset size can be preset. Optionally, the target overlay can be displayed on a lower side of the media content playback interface, to avoid occluding the currently playing first media content. In response to the swipe operation triggered by the user in the preset direction in the preset display area of the media content playback interface, the target overlay of the preset size is displayed, and the plurality of pieces of second media content are displayed in the third layout in the target overlay. In the second layout, the plurality of pieces of second media content can be displayed in multiple columns.

FIG. 4 is a schematic diagram of another interface interaction according to an embodiment of the present disclosure. As shown in FIG. 4, in response to a swipe operation triggered by the user in a preset direction in a preset display area 42 of a media content playback interface 41, a target overlay 43 of a preset size is displayed, and a plurality of pieces of second media content 44 are displayed in the third layout in the target overlay 43.

**In** the method for displaying media content according to this embodiment, the pieces of second media content are displayed in different layouts based on the first trigger operation of the user, which enriches the display effect in the media content playback interface.

Further, based on any one of the above embodiments, the method further includes:
displaying, in the first playback mode, the media content in a first layout in the media content playback interface; and displaying, in the second playback mode, the media content in the first layout in the media content playback interface, where the first layout is different from the second layout and the third layout.

In this embodiment, the media content is displayed in the first layout in the media content playback interface in the first playback mode, where the media content can be displayed in a single column in the first layout. The media content is displayed in the first layout in the media content playback interface in the second playback mode, where the first layout is different from the second layout and the third layout.

Further, based on any one of the above embodiments, the plurality of pieces of second media content are displayed on a preset horizontal plane of the media content playback interface in the second layout and the third layout.

Optionally, the plurality of pieces of second media content can be displayed in multiple columns on the preset horizontal plane of the media content playback interface in the second layout and the third layout. It can be understood that different layouts may correspond to different media content switching operations. A switching operation being the swipe operation is used as an example. In a single-column layout (the first layout), one piece of media content is switched in each swipe operation. In a multi-column layout (the second layout and the third layout), a waterfall flow can be used, in which the quantity of media content switched in each swipe operation is related to a swiping distance, and after the swipe operation, there are cases where only partial information of a piece of media content is displayed.

In the method for displaying media content according to this embodiment, a plurality of different layouts are set, such that the media content can be displayed in different layouts in different scenarios, thereby improving the display effect of the media content.

Further, based on any one of the above embodiments, in the first playback mode, the media content playback interface includes a preset trigger control.

The method further includes:
displaying the plurality of pieces of second media content in response to a second trigger operation of the user on the trigger control.

**In** this embodiment, in the first playback mode, the media content playback interface includes a preset trigger control.

Optionally, the trigger control is displayed on a lower side of the first media content, or the trigger control is displayed in the form of a floating window over the first media content. The user can also adjust a display position of the trigger control according to their actual requirements. For example, the user can adjust the display position of the trigger control by long pressing on the trigger control and dragging the trigger control to a specified position.

After the preset trigger control is displayed, the user can perform a trigger operation on the trigger control according to their actual requirements. The plurality of pieces of second media content are displayed in response to the second trigger operation of the user on the trigger control.

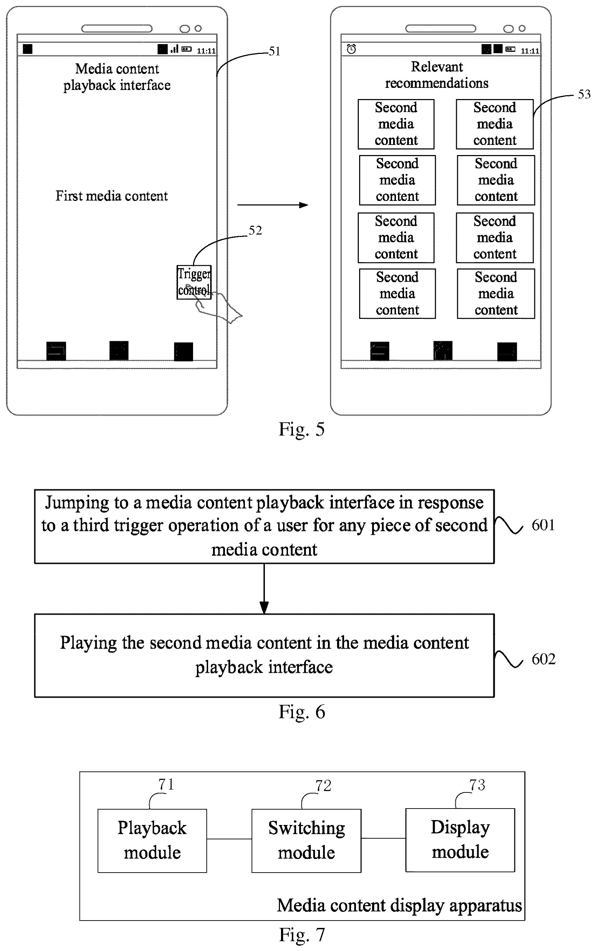

FIG. 5 is a schematic diagram of another interface interaction according to an embodiment of the present disclosure. As shown in FIG. 5, in the first playback mode, a media content playback interface 51 includes a preset trigger control 52. The plurality of pieces of second media content can be displayed in response to the second trigger operation of the user on the trigger control 52.

In the method for displaying media content according to this embodiment, in the first playback mode, the media content playback interface includes the preset trigger control, such that the user can view the plurality of pieces of second media content by performing the second trigger operation on the trigger control, thus enriching the interactive operations and displayed content in the media content playback interface.

FIG. 6 is a schematic flowchart of a method for displaying media content according to another embodiment of the present disclosure. Based on any one of the above embodiments, as shown in FIG. 6, after step 103, the method further includes:
step 601: jumping to the media content playback interface in response to a third trigger operation performed by the user for any piece of second media content; and
step 602: playing the second media content in the media content playback interface.

In this embodiment, after the plurality of pieces of second media content are displayed, the user can view one or more pieces of second media content according to their actual requirements. Optionally, a jump can be made to the media content playback interface in response to the third trigger operation of the user for any piece of second media content. The third trigger operation includes, but is not limited to, a click, a double click, and a long press, and other trigger operations for the second media content. After the jump is made to the media content playback interface, the second media content selected by the user can be played in the media content playback interface.

Further, based on any one of the above embodiments, after step 602, the method further includes: switching to play other media content among the plurality of pieces of second media content in response to the first trigger operation of the user in the media content playback interface.

In this embodiment, the user can switch and view different second media content in the media content playback interface. Optionally, a switch to other media content among the plurality of pieces of second media content can be performed for playback in response to the first trigger operation of the user in the media content playback interface. For example, the user can switch the second media content through swipe-up, swipe-down, and other operations.

Optionally, the plurality of pieces of second media content may include media content of different media types. For example, the second media content may include one or more pieces of image-text media content, image media content, video media content, text media content, and audio media content. When switching to play the second media content, it is possible to switch between the second media content of different media types for playback.

In the method for displaying media content according to this embodiment, in response to the third trigger operation of the user for any piece of second media content, the second media content selected by the user is played, and a switch to the other media content among the plurality of pieces of second media content is performed for playback in response to the first trigger operation triggered by the user, such that the user can view one or more pieces of second media content that are currently of interest, thus making the currently playing media content more in line with the requirements of the user and improving the display effect.

Further, based on any one of the above embodiments, after step 102, the method further includes:
in response to a first switching operation triggered by the user based on the first media content, determining a first media content set to which the first media content belongs, and switching to play other media content in the first media content set;
   and/or
in response to a second switching operation triggered by the user based on the first media content, switching to play the media content in the first media content stream; or in response to a second switching operation triggered by the user based on the first media content, determining a first media content set to which the first media content belongs, and switching to play media content in a second media content set.

During practical application, due to a large volume of some media content, the media content may be divided into a plurality of pieces of media content and then posted as a media content set.

Further, when playing the first media content in the first playback mode, when the first media content is media content in any media content set, in response to the first switching operation triggered by the user based on the first media content, the first media content set to which the first media content belongs is determined, and a switch to other media content in the first media content set is performed for playback. Optionally, the other media content can be switched to play in turn according to a preset order of the pieces of media content in the first media content set. For example, if the currently playing first media content is second media content in the first media content set, third media content in the first media content set can be played in response to the first switching operation triggered by the user.

Optionally, in the first playback mode, the user can switch to play the other media content in the same media content set through the first switching operation or the second switching operation. The second switching operation is the first trigger operation in the second preset area of the media content playback interface, the second preset area being different from the first preset area. As an implementable approach, the first switching operation is different from the second switching operation. For example, the first switching operation can be a swipe-up or swipe-down operation, and the second switching operation can be a swipe-left or swipe-right operation.

When playing the first media content in the first playback mode, when the first media content is media content in any media content set, in response to the second switching operation triggered by the user based on the first media content, a switch to the media content in the first media content stream is performed for playback.

As an implementable approach, the user can view content in other media content sets through a preset second switching operation. When playing the first media content in the first playback mode, when the first media content is media content in any media content set, in response to the second switching operation triggered by the user based on the first media content, the first media content set to which the first media content belongs is determined, and a switch to the media content in the second media content set is performed for playback.

It should be noted that the above embodiments can be implemented alone or in combination. When the above embodiments are implemented in combination, in response to the first switching operation triggered by the user for the first media content, a switch to the other media content in the first media content set can be performed for playback. In response to the second switching operation triggered by the user for the first media content, a switch to the media content in the second media content set can be performed for playback. This is not limited in the present disclosure.

In the method for displaying media content according to this embodiment, according to different switching operations triggered by the user based on the first media content, a switch to different pieces of media content is performed for display, which can enrich the interaction modes based on the first media content. Furthermore, the currently playing media content is more in line with the requirements of the user, and the display effect is improved.

FIG. 7 is a schematic diagram of a structure of an apparatus for displaying media content according to an embodiment of the present disclosure. As shown in FIG. 7, the apparatus includes: a playback module 71, a switching module 72, and a display module 73. The playback module 71 is configured to play first media content in a first media content stream in a preset second playback mode in a media content playback interface, where the first media content stream includes a plurality of pieces of media content, with a switch between the media content being performed in the media content stream based on a first trigger operation. The switching module 72 is configured to play the first media content in a preset first playback mode in the media content playback interface in response to a playback mode switching operation triggered in the media content playback interface, where the first media content is displayed in the media content playback interface in the first playback mode. The display module 73 is configured to display a plurality of pieces of second media content associated with the first media content in response to the first trigger operation in a first preset area of the media content playback interface.

Further, based on any one of the above embodiments, the playback module is configured to display the first media content and at least one of the following in the media content playback interface in the second playback mode: at least one interactive control associated with the first media content, associated information corresponding to the first media content, or channel tag information.

Further, based on any one of the above embodiments, the switching module is configured to hide at least one of the following in the media content playback interface in the first playback mode: at least one interactive control associated with the first media content, associated information corresponding to the first media content, or channel tag information.

Further, based on any one of the above embodiments, the apparatus further includes: the switching module configured to switch to display third media content in the media content playback interface in response to the first trigger operation in a second preset area of the media content playback interface, where the third media content is media content in the first media content stream and/or the plurality of pieces of second media content associated with the first media content.

Further, based on any one of the above embodiments, the display module is configured to: display the plurality of pieces of second media content associated with the first media content in the media content playback interface in response to a swipe operation triggered by a user in a preset direction in the first preset area.

Further, based on any one of the above embodiments, the display module is configured to: in response to a swipe operation triggered by the user in the preset direction in a preset display area of the media content playback interface, display the plurality of pieces of second media content in full screen in a second layout; or in response to a swipe operation triggered by the user in the preset direction in a preset display area of the media content playback interface, display a target overlay of a preset size, and display the plurality of pieces of second media content in a third layout in the target overlay.

Further, based on any one of the above embodiments, the apparatus further includes the display module further configured to: display, in the first playback mode, the media content in a first layout in the media content playback interface; and display, in the second playback mode, the media content in the first layout in the media content playback interface, where the first layout is different from the second layout and the third layout.

Further, based on any one of the above embodiments, the plurality of pieces of second media content are displayed on a preset horizontal plane of the media content playback interface in the second layout and the third layout.

Further, based on any one of the above embodiments, in the first playback mode, the media content playback interface includes a preset trigger control. The apparatus further includes: the display module configured to display the plurality of pieces of second media content in response to a second trigger operation of the user on the trigger control.

Further, based on any one of the above embodiments, the trigger control is displayed on a lower side of the first media content, or the trigger control is displayed in the form of a floating window over the first media content.

Further, based on any one of the above embodiments, the apparatus further includes a jump module configured to jump to the media content playback interface in response to a third trigger operation of the user for any piece of second media content; and the playback module configured to play the second media content in the media content playback interface.

Further, based on any one of the above embodiments, the apparatus further includes the switching module configured to switch to play other media content among the plurality of pieces of second media content in response to the first trigger operation of the user in the media content playback interface.

Further, based on any one of the above embodiments, the apparatus further includes: the switching module further configured to, in response to a first switching operation triggered by the user based on the first media content, determine a first media content set to which the first media content belongs, and switch to play other media content in the first media content set; and/or the switching module further configured to: in response to a second switching operation triggered by the user based on the first media content, switch to play the media content in the first media content stream; or in response to a second switching operation triggered by the user based on the first media content, determine a first media content set to which the first media content belongs, and switch to play media content in a second media content set.

Further, based on any one of the above embodiments, the second switching operation is the first trigger operation in the second preset area of the media content playback interface, the second preset area is different from the first preset area.

Further, based on any one of the above embodiments, the second media content includes one or more pieces of image-text media content, image media content, video media content, text media content, and audio media content.

The device provided in this embodiment may be configured to perform the technical solution of the above method embodiment. The implementation principle and technical effects thereof are similar, and are not described herein again in this embodiment.

To implement the above embodiments, an embodiment of the present disclosure further provides an electronic device. The electronic device includes: a processor and a memory, where
the memory stores computer-executable instructions; and
the processor executes the computer-executable instructions stored in the memory, to cause the processor to perform the method for displaying media content according to any one of the above embodiments.

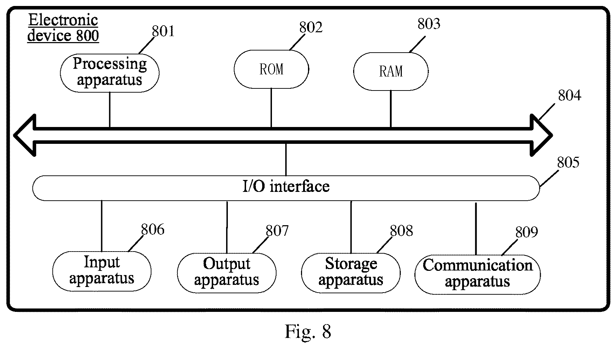

FIG. 8 is a schematic diagram of a structure of an electronic device according to an embodiment of the present disclosure. The electronic device 800 may be a terminal device or a server. The terminal device may include, but is not limited to, a mobile terminal such as a mobile phone, a notebook computer, a digital broadcast receiver, a personal digital assistant (PDA), a portable Android device (PAD), a portable media player (PMP), a vehicle-mounted terminal (such as a vehicle navigation terminal), etc., and a fixed terminal such as a digital TV, a desktop computer, etc. The electronic device shown in FIG. 8 is merely an example, and shall not impose any limitation on the function and scope of use of the embodiments of the present disclosure.

As shown in FIG. 8, the electronic device 800 may include a processing apparatus (e.g., a central processing unit, a graphics processing unit, etc.) 801 that may perform a variety of appropriate actions and processing in accordance with a program stored in a read-only memory (ROM) 802 or a program loaded from a storage apparatus 808 into a random access memory (RAM) 803. The RAM 803 further stores various programs and data required for the operation of the electronic device 800. The processing apparatus 801, the ROM 802, and the RAM 803 are connected to each other through a bus 804. An input/output (I/O) interface 805 is also connected to the bus 804.

Generally, the following apparatuses may be connected to the I/O interface 805: an input apparatus 806 including, for example, a touchscreen, a touchpad, a keyboard, a mouse, a camera, a microphone, an accelerometer, a gyroscope, etc.; an output apparatus 807 including, for example, a liquid crystal display (LCD), a speaker, a vibrator, etc.; the storage apparatus 808 including, for example, a tape, a hard disk, etc.; and a communication apparatus 809. The communication apparatus 809 may allow the electronic device 800 to perform wireless or wired communication with other devices to exchange data. Although FIG. 8 shows the electronic device 800 having various apparatuses, it should be understood that it is not required to implement or have all of the shown apparatuses. It may be an alternative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a computer-readable medium, where the computer program includes program code for performing the method shown in the flowchart. In such an embodiment, the computer program may be downloaded and installed from a network via the communication apparatus 809, installed from the storage apparatus 808, or installed from the ROM 802. The computer program, when executed by the processing apparatus 801, causes the above-mentioned functions defined in the method according to the embodiments of the present disclosure to be performed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

An embodiment of the present disclosure further provides a computer-readable storage medium storing computer-executable instructions that, when executed by a processor, cause the method for displaying media content according to any one of the above embodiments to be implemented.

An embodiment of the present disclosure further provides a computer program product including a computer program that, when executed by a processor, causes the method for displaying media content according to any one of the above embodiments to be implemented.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to perform the method shown in the above embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the present disclosure, a method for displaying media content is provided. The method includes:
playing first media content in a first media content stream in a preset second playback mode in a media content playback interface, where the first media content stream includes a plurality of pieces of media content, with a switch between the media content being performed in the media content stream based on a first trigger operation;
playing the first media content in a preset first playback mode in the media content playback interface in response to a playback mode switching operation triggered in the media content playback interface, where the first media content is displayed in the media content playback interface in the first playback mode; and
displaying a plurality of pieces of second media content associated with the first media content in response to the first trigger operation in a first preset area of the media content playback interface.

According to one or more embodiments of the present disclosure, the playing first media content in a media content stream in a preset second playback mode in a media content playback interface includes: in the second playback mode, displaying, in the media content playback interface, the first media content and at least one of: at least one interactive control associated with the first media content, associated information corresponding to the first media content, or channel tag information.

According to one or more embodiments of the present disclosure, the playing the first media content in a preset first playback mode in the media content playback interface includes:
in the first playback mode, hiding, in the media content playback interface, at least one of: at least one interactive control associated with the first media content, associated information corresponding to the first media content, or channel tag information.

According to one or more embodiments of the present disclosure, after the playing the first media content in a preset first playback mode in the media content playback interface, the method further includes:
switching to display third media content in the media content playback interface in response to the first trigger operation in a second preset area of the media content playback interface, where the third media content is media content in the first media content stream and/or the plurality of pieces of second media content associated with the first media content.

According to one or more embodiments of the present disclosure, the displaying a plurality of pieces of second media content associated with the first media content in response to the first trigger operation in a first preset area of the media content playback interface includes:
displaying the plurality of pieces of second media content associated with the first media content in the media content playback interface in response to a swipe operation triggered by a user in a preset direction in the first preset area.

According to one or more embodiments of the present disclosure, the displaying the plurality of pieces of second media content associated with the first media content in the media content playback interface in response to a swipe operation triggered by a user in a preset direction in the first preset area includes:
in response to a swipe operation triggered by the user in the preset direction in a preset display area of the media content playback interface, displaying the plurality of pieces of second media content in full screen in a second layout;
   or
in response to a swipe operation triggered by the user in the preset direction in a preset display area of the media content playback interface, displaying a target overlay of a preset size, and displaying the plurality of pieces of second media content in a third layout in the target overlay.

According to one or more embodiments of the present disclosure, the method further includes:
displaying, in the first playback mode, the media content in a first layout in the media content playback interface; and displaying, in the second playback mode, the media content in the first layout in the media content playback interface, where the first layout is different from the first layout and the second layout.

According to one or more embodiments of the present disclosure, the plurality of pieces of second media content are displayed on a preset horizontal plane of the media content playback interface in the second layout and the third layout.

According to one or more embodiments of the present disclosure, in the first playback mode, the media content playback interface includes a preset trigger control.

The method further includes:
displaying the plurality of pieces of second media content in response to a second trigger operation of the user on the trigger control.

According to one or more embodiments of the present disclosure, the trigger control is displayed on a lower side of the first media content, or the trigger control is displayed in the form of a floating window over the first media content.

According to one or more embodiments of the present disclosure, after the displaying the plurality of pieces of second media content associated with the first media content in the media content playback interface, the method further includes:
jumping to the media content playback interface in response to a third trigger operation of the user for any piece of second media content; and
playing the second media content in the media content playback interface.

According to one or more embodiments of the present disclosure, after the playing the second media content in the media content playback interface, the method further includes:
switching to play other media content among the plurality of pieces of second media content in response to the first trigger operation of the user in the media content playback interface.

According to one or more embodiments of the present disclosure, after the playing the first media content in a preset first playback mode in the media content playback interface, the method further includes:
in response to a first switching operation triggered by the user based on the first media content, determining a first media content set to which the first media content belongs, and switching to play other media content in the first media content set;
   and/or
in response to a second switching operation triggered by the user based on the first media content, switching to play the media content in the first media content stream; or in response to a second switching operation triggered by the user based on the first media content, determining a first media content set to which the first media content belongs, and switching to play media content in a second media content set.

According to one or more embodiments of the present disclosure, the second switching operation is the first trigger operation in a second preset area of the media content playback interface, the second preset area is different from the first preset area.

According to one or more embodiments of the present disclosure, the second media content includes one or more pieces of: image-text media content, image media content, video media content, text media content, and audio media content.

According to one or more embodiments of the present disclosure, an apparatus for displaying media content is provided. The apparatus includes:
a playback module configured to play first media content in a first media content stream in a preset second playback mode in a media content playback interface, where the first media content stream includes a plurality of pieces of media content, with a switch between the media content being performed in the media content stream based on a first trigger operation;
a switching module configured to play the first media content in a preset first playback mode in the media content playback interface in response to a playback mode switching operation triggered in the media content playback interface, where the first media content is displayed in the media content playback interface in the first playback mode; and
a display module configured to display a plurality of pieces of second media content associated with the first media content in response to the first trigger operation in a first preset area of the media content playback interface.

According to one or more embodiments of the present disclosure, the playback module is configured to
display the first media content and at least one of the following in the media content playback interface in the second playback mode: at least one interactive control associated with the first media content, associated information corresponding to the first media content, or channel tag information.

According to one or more embodiments of the present disclosure, the switching module is configured to
hide at least one of the following in the media content playback interface in the first playback mode: at least one interactive control associated with the first media content, associated information corresponding to the first media content, or channel tag information.

According to one or more embodiments of the present disclosure, the apparatus further includes:
the switching module configured to switch to display third media content in the media content playback interface in response to the first trigger operation in a second preset area of the media content playback interface, where the third media content is media content in the first media content stream and/or the plurality of pieces of second media content associated with the first media content.

According to one or more embodiments of the present disclosure, the display module is configured to:
display the plurality of pieces of second media content associated with the first media content in the media content playback interface in response to a swipe operation triggered by a user in a preset direction in the first preset area.

According to one or more embodiments of the present disclosure, the display module is configured to:
in response to a swipe operation triggered by the user in the preset direction in a preset display area of the media content playback interface, display the plurality of pieces of second media content in full screen in a second layout;
   or
in response to a swipe operation triggered by the user in the preset direction in a preset display area of the media content playback interface, display a target overlay of a preset size, and display the plurality of pieces of second media content in a third layout in the target overlay.

According to one or more embodiments of the present disclosure, the apparatus further includes the display module configured to: display, in the first playback mode, the media content in a first layout in the media content playback interface; and display, in the second playback mode, the media content in the first layout in the media content playback interface, where the first layout is different from the first layout and the second layout.

According to one or more embodiments of the present disclosure, the plurality of pieces of second media content are displayed on a preset horizontal plane of the media content playback interface in the second layout and the third layout.

According to one or more embodiments of the present disclosure, in the first playback mode, the media content playback interface includes a preset trigger control.

The apparatus further includes:
the display module configured to display the plurality of pieces of second media content in response to a second trigger operation of the user on the trigger control.

According to one or more embodiments of the present disclosure, the trigger control is displayed on a lower side of the first media content, or the trigger control is displayed in the form of a floating window over the first media content.

According to one or more embodiments of the present disclosure, the apparatus further includes:
a jump module configured to jump to the media content playback interface in response to a third trigger operation of the user for any piece of second media content; and
the playback module configured to play the second media content in the media content playback interface.

According to one or more embodiments of the present disclosure, the apparatus further includes:
the switching module configured to switch to play other media content among the plurality of pieces of second media content in response to the first trigger operation of the user in the media content playback interface.

According to one or more embodiments of the present disclosure, the apparatus further includes:
the switching module further configured to, in response to a first switching operation triggered by the user based on the first media content, determine a first media content set to which the first media content belongs, and switch to play other media content in the first media content set;
   and/or
the switching module further configured to: in response to a second switching operation triggered by the user based on the first media content, switch to play the media content in the first media content stream; or in response to a second switching operation triggered by the user based on the first media content, determine a first media content set to which the first media content belongs, and switch to play media content in a second media content set.

According to one or more embodiments of the present disclosure, the second switching operation is the first trigger operation in the second preset area of the media content playback interface, the second preset area is different from the first preset area.

According to one or more embodiments of the present disclosure, the second media content includes one or more pieces of: image-text media content, image media content, video media content, text media content, and audio media content.

According to one or more embodiments of the present disclosure, an electronic device is provided. The electronic device includes: at least one processor and a memory.

The memory stores computer-executable instructions.

The at least one processor executes the computer-executable instructions stored in the memory, to cause the at least one processor to perform the method for displaying media content according to the above embodiment and various possible designs of the above embodiment.

According to one or more embodiments of the present disclosure, a computer-readable storage medium is provided. The computer-readable storage medium stores computer-executable instructions that, when executed by a processor, cause the method for displaying media content according to the above embodiment and various possible designs of the above embodiment to be implemented.

According to one or more embodiments of the present disclosure, a computer program product is provided. The computer program product includes a computer program that, when executed by a processor, causes the method for displaying media content according to the above embodiment and various possible designs of the above embodiment to be implemented.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable subcombination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A method for displaying media content, **characterized by** comprising:
playing first media content in a first media content stream in a preset second playback mode in a media content playback interface, wherein the first media content stream comprises a plurality of pieces of media content, with a switch between the media content being performed in the media content stream based on a first trigger operation;
playing the first media content in a preset first playback mode in the media content playback interface in response to a playback mode switching operation triggered in the media content playback interface, wherein the first media content is displayed in the media content playback interface in the first playback mode; and
displaying a plurality of pieces of second media content associated with the first media content in response to the first trigger operation in a first preset area of the media content playback interface.

2. The method according to claim **1, characterized in that** the playing first media content in a media content stream in a preset second playback mode in a media content playback interface comprises:
in the second playback mode, displaying, in the media content playback interface, the first media content and at least one of: at least one interactive control associated with the first media content, associated information corresponding to the first media content, or channel tag information.

3. The method according to claim 2, **characterized in that** the playing the first media content in a preset first playback mode in the media content playback interface comprises:
in the first playback mode, hiding, in the media content playback interface, at least one of: at least one interactive control associated with the first media content, associated information corresponding to the first media content, or channel tag information.

4. The method according to any one of claims 1 to 3, **characterized in that** after the playing the first media content in a preset first playback mode in the media content playback interface, the method further comprises:
switching to display third media content in the media content playback interface in response to the first trigger operation in a second preset area of the media content playback interface, wherein the third media content comprises media content in the first media content stream and/or the plurality of pieces of second media content associated with the first media content.

5. The method according to any one of claims 1 to 4, **characterized in that** the displaying a plurality of pieces of second media content associated with the first media content in response to the first trigger operation in a first preset area of the media content playback interface comprises:
displaying the plurality of pieces of second media content associated with the first media content in the media content playback interface in response to a swipe operation triggered by a user in a preset direction in the first preset area.

6. The method according to claim 5, **characterized in that** the displaying the plurality of pieces of second media content associated with the first media content in the media content playback interface in response to a swipe operation triggered by a user in a preset direction in the first preset area comprises:
in response to a swipe operation triggered by the user in the preset direction in a preset display area of the media content playback interface, displaying the plurality of pieces of second media content in full screen in a second layout;
or
in response to a swipe operation triggered by the user in the preset direction in a preset display area of the media content playback interface, displaying a target overlay of a preset size, and displaying the plurality of pieces of second media content in a third layout in the target overlay.

7. The method according to claim 6, **characterized by** further comprising:
displaying, in the first playback mode, the media content in a first layout in the media content playback interface; and displaying, in the second playback mode, the media content in the first layout in the media content playback interface, wherein the first layout is different from the second layout and the third layout.

8. The method according to claim 7, **characterized in that** the plurality of pieces of second media content are displayed on a preset horizontal plane of the media content playback interface in the second layout and in the third layout.

9. The method according to any one of claims 1 to 8, **characterized in that** in the first playback mode, the media content playback interface comprises a preset trigger control; and
the method further comprises:
displaying the plurality of pieces of second media content in response to a second trigger operation of the user on the trigger control.

10. The method according to claim 9, **characterized in that** the trigger control is displayed on a lower side of the first media content, or the trigger control is displayed in a form of a floating window over the first media content.

11. The method according to any one of claims 1 to 10, **characterized in that** after the displaying the plurality of pieces of second media content associated with the first media content in the media content playback interface, the method further comprises:
jumping to the media content playback interface in response to a third trigger operation of the user for any piece of second media content; and
playing the second media content in the media content playback interface.

12. The method according to claim 11, **characterized in that** after the playing the second media content in the media content playback interface, the method further comprises:
switching to play other media content among the plurality of pieces of second media content in response to the first trigger operation of the user in the media content playback interface.

13. The method according to any one of claims 1 to 12, **characterized in that** after the playing the first media content in a preset first playback mode in the media content playback interface, the method further comprises:
in response to a first switching operation triggered by the user based on the first media content, determining a first media content set to which the first media content belongs, and switching to play other media content in the first media content set;
and/or
in response to a second switching operation triggered by the user based on the first media content, switching to play the media content in the first media content stream; or in response to a second switching operation triggered by the user based on the first media content, determining a first media content set to which the first media content belongs, and switching to play media content in a second media content set.

14. The method according to claim 13, **characterized in that** the second switching operation is the first trigger operation in a second preset area of the media content playback interface, and the second preset area is different from the first preset area.

15. The method according to any one of claims 1 to 14, **characterized in that** the second media content comprises one or more pieces of: image-text media content, image media content, video media content, text media content, and audio media content.

16. An apparatus for displaying media content, **characterized by** comprising:
a playback module configured to play first media content in a first media content stream in a preset second playback mode in a media content playback interface, wherein the first media content stream comprises a plurality of pieces of media content, with a switch between the media content being performed in the media content stream based on a first trigger operation;
a switching module configured to play the first media content in a preset first playback mode in the media content playback interface in response to a playback mode switching operation triggered in the media content playback interface, wherein the first media content is displayed in the media content playback interface in the first playback mode; and
a display module configured to display a plurality of pieces of second media content associated with the first media content in response to the first trigger operation in a first preset area of the media content playback interface.

17. An electronic device, **characterized by** comprising: a processor and a memory, wherein
the memory stores computer-executable instructions; and
the processor executes the computer-executable instructions stored in the memory, to cause the processor to perform the method for displaying media content according to any one of claims 1 to 15.

18. A computer-readable storage medium storing computer-executable instructions that, when executed by a processor, cause the method for displaying media content according to any one of claims 1 to 15 to be implemented.

19. A computer program product, **characterized by** comprising a computer program that, when executed by a processor, causes the method for displaying media content according to any one of claims 1 to 15 to be implemented.
